# EUROPEAN PATENT APPLICATION

(11) **EP 3 082 362 A1**
(43) Date of publication of application: **19.10.2016**
(21) Application number: 14877155.3
(22) Date of filing: 26.07.2014
(51) Int. Cl.: H04W 36/30

(54) **CHANNEL MEASUREMENT METHOD, CELL HANDOVER METHOD, RELATED DEVICE AND SYSTEM**

(30) Priority: 30.12.2013 WO PCT/CN2013/090877
(71) Applicant: Huawei Technologies Co., Ltd., Longgang District Shenzhen, Guangdong 518129 (CN)
(72) Inventor: LIU, Jianqin, Shenzhen Guangdong 518129 (CN); LIU, Jianghua, Shenzhen Guangdong 518129 (CN); LIU, Kunpeng, Shenzhen Guangdong 518129 (CN); ZHOU, Yongxing, Shenzhen Guangdong 518129 (CN)
(74) Representative: Körber, Martin Hans
(86) International application number: PCT/CN2014/083091
(87) International publication number: WO 2015/101029

(57) **Abstract**

Embodiments of the present invention disclose a channel measurement method, including: receiving reference signal resource configuration information of a target cell, where a quantity of pieces of the reference signal resource configuration information of the target cell is greater than 1; performing channel measurement on the target cell according to the reference signal resource configuration information; and reporting a channel measurement result of the target cell to a serving cell. Accordingly, the present invention further discloses a cell handover method, a related apparatus, and a system. According to the present invention, a problem in the prior art that channel quality of beams, having different downtilts, of a target cell cannot be obtained is resolved, and a channel measurement result of a target cell for beams having different downtilts is reported to a serving cell to perform cell handover, which greatly optimizes flexibility of cell handover, improves resource utilization or spectral efficiency, improves a system capacity, and better implements dynamic changes in coverage of cells.

## Description

### TECHNICAL FIELD

The present invention relates to the communications field, and in particular, to a channel measurement method, a cell handover method, a related apparatus, and a system.

### BACKGROUND

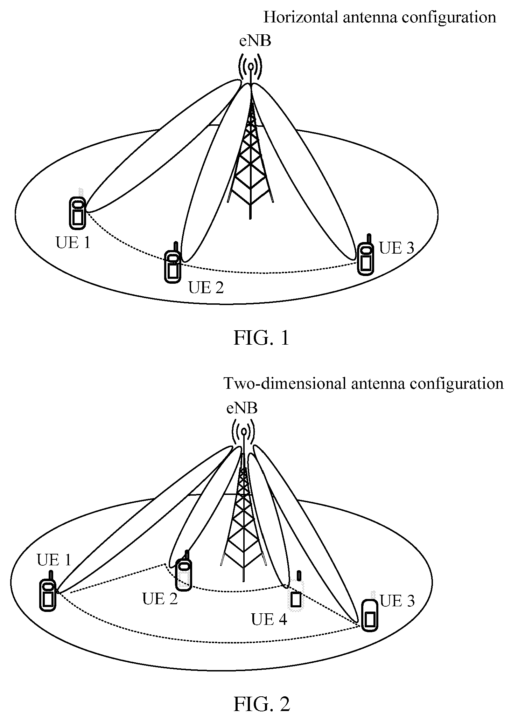

A multiple-antenna (Multi-input Multi-output, MIMO) technology has been widely used in a wireless communications system to improve a system capacity and to ensure cell coverage, for example, the downlink of a Long Term Evolution (Long Term Evolution, LTE) system employs multi-antenna based transmit diversity, open-loop/closed-loop spatial multiplexing, and UE specific reference signal (Demodulation Reference Signal, DM-RS) based multi-stream transmission, where the DM-RS based multi-stream transmission is a main transmission mode in an LTE-A system and a subsequent system. At present, antenna configuration and a horizontal transmit beam that correspond to the DM-RS based multi-stream transmission are shown in FIG. 1.

To further improve performance of a multi-antenna system, people are studying two-dimensional planar array antenna configuration, that is, antennas are distributed in both horizontal and vertical directions, so that beamforming in horizontal and vertical directions can be performed simultaneously, which is referred to as three-dimensional beamforming. In this way, compared with current beamforming that has only a horizontal transmit beam, degrees of freedom in a vertical direction is increased, so that more users can be multiplexed in a same time-frequency resource, different users are distinguished according to beams that are in vertical or horizontal directions, which improves resource utilization or spectral efficiency, as shown in FIG. 2.

Two-dimensional antenna configuration is implemented by using an active antenna system (Active Antenna Systems, AAS). Different from a passive antenna system of a conventional base station, the AAS may flexibly provide, in a vertical direction, beams having different downtilts, and a base station may implement different coverage for user equipment (User Equipment, UE) by adjusting different downtilts of beams. As shown in FIG. 2, UE 1 and UE 3 in a cell may be covered and served by a beam having a downtilt A, and UE 2 and UE 4 are covered and served by another beam having a different downtilt B.

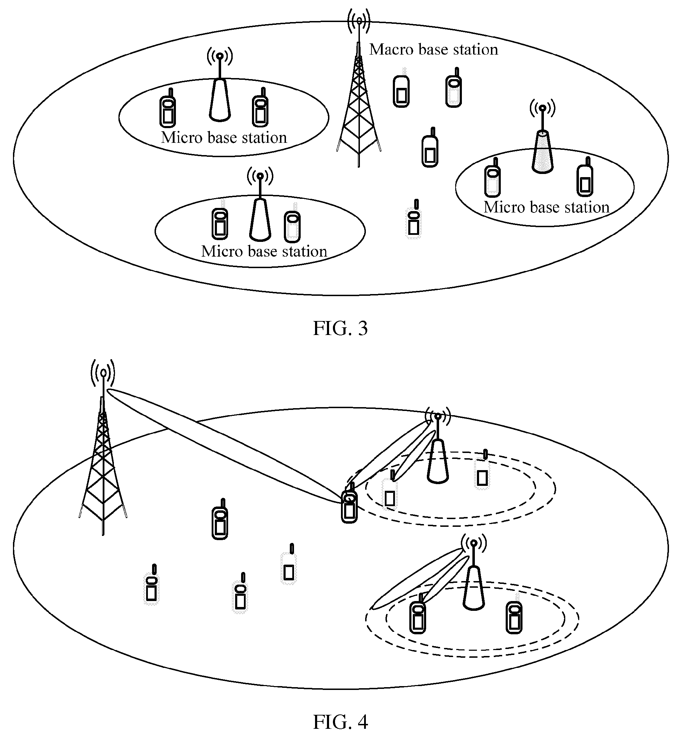

In addition, a heterogeneous network in which a macro cell and a micro cell coexist is currently a very important network deployment in a system, where a base station in the macro cell (macro base station: Macro node) and a base station in the micro cell (micro base station: Pico node) have different transmit power, and transmit power of the macro base station is generally greater than transmit power of the micro base station. One macro cell may include multiple micro cells, and the macro cell may communicate with the micro cells of the macro cell by using a same frequency or different frequencies. The macro base station in the heterogeneous network is mainly to ensure cell coverage, and the micro base station is mainly to offload (offload) a service of the macro base station, that is, when service load of the macro base station is very heavy, some UEs of the macro base station may be handed over to the micro base station for serving, so that load of the macro base station can be lightened, as shown in FIG. 3.

Due to differences between transmit power of the macro base station and that of the micro base station, the macro base station causes interference on UE served by the micro base station, and especially causes great interference on UE that is served by the micro base station and that is at a boundary between the macro base station and the micro base station. In this scenario, a three-dimensional beamforming technology implemented by an AAS antenna provides possibilities of service load balancing between the macro cell and the micro cell and interference coordination between cells in a spatial dimension, that is, dynamic changes in coverage of cells are implemented by flexibly adjusting beams, having different downtilts, of the macro base station and the micro base station (that is, cell free-breathing), so as to achieve an effect of interference coordination and load balancing between cells, as shown in FIG. 4. For example, when service load of the macro base station is heavy, a macro cell may trigger some UEs (for example, UEs at a boundary between the macro base station and the micro base station) to be handed over to a micro cell for serving by the micro base station; when cell handover for service offloading is performed, a cell coverage range may be changed by simultaneously adjusting downtilts of beams of the macro base station and the micro base station. For example, the micro base station increases a cell coverage range (for which, reference may be made to an outer loop of a micro cell in FIG. 4) by adjusting a downtilt of a beam, so that UE that is previously served by the macro base station is within an expanded cell coverage range of the micro base station; in addition, to reduce interference from the macro base station on the UE that is within the coverage range of the micro base station, a downtilt of a beam of the macro base station may be adjusted.

Generally, a serving cell and a target cell are defined in the prior art, where the serving cell is a cell to which UE maintains a connection and with which the UE performs normal communication, and the target cell is a cell to which the UE may be handed over from the serving cell, where the serving cell may be included. One UE may have multiple target cells. For example, when UE served by a macro base station needs to be handed over to a micro cell, a macro cell is a serving cell, and the micro cell is a target cell. In the foregoing scenario of a heterogeneous network, when cell handover is performed for UE, the UE needs to determine channel quality of a target cell, that is, needs to measure the channel quality of the target cell, and then reports the channel quality of the target cell to a serving cell of the UE to perform handover processing.

Then, when the UE measures the target cell, how the UE obtains channel quality of beams, having different downtilts, in each target cell, and then obtains channel quality of a beam, having an optimal downtilt for the UE, in the target cell is a hot question concerned by a person skilled in the art; similarly, the question also exists in a homogeneous network, that is, when different macro cells all use an AAS technology, beams having different downtilts may be generated inside each macro cell, and then when the UE is handed over between different macro cells, how the UE obtains channel quality of beams, having different downtilts, of a target cell.

In the prior art, when UE is preparing for cell handover, the UE measures channel quality, such as reference signal received power (Reference Signal Received Power, RSRP), of a target cell, where the channel quality of the target cell is measured by using a cell-specific reference signal (cell-specific reference signal, CRS) antenna port 0 of the target cell. When the UE measures the channel quality of the target cell, the UE first synchronizes with the target cell; then obtains, from a synchronization signal, an identifier of the target cell, that is, a cell ID; then obtains, according to the obtained ID of the target cell, a time-frequency resource location of the CRS antenna port 0 of the target cell and a sequence of a reference signal; and finally performs measurement according to the CRS antenna port 0 of the target cell.

However, the CRS is a cell-specific reference signal, and is broadcast to all UEs in a cell. Broadcast information or a broadcast channel of the cell are both transmitted on an antenna port that corresponds to the CRS, and therefore, a beam of the CRS is generally omnidirectional, an objective of which is to ensure coverage of the cell. Therefore, in the prior art, channel quality of beams, having different downtilts, of a target cell cannot be obtained by using a CRS of the target cell.

### SUMMARY

Embodiments of the present invention provide a channel measurement method, a cell handover method, a related apparatus, and a system, which resolve a problem in the prior art that channel quality of beams, having different downtilts, of a target cell cannot be obtained, and optimizes cell handover.

According to a first aspect, an embodiment of the present invention provides a channel measurement method, including:
receiving reference signal resource configuration information of a target cell, where a quantity of pieces of the reference signal resource configuration information of the target cell is greater than 1;
performing channel measurement on the target cell according to the reference signal resource configuration information; and
reporting a channel measurement result of the target cell to a serving cell.

With reference to the first aspect, in a first possible implementation manner, the receiving reference signal resource configuration information of each target cell includes:
receiving the reference signal resource configuration information, which is notified by means of broadcast, of each target cell; or
receiving the reference signal resource configuration information, which is notified by the serving cell by using user equipment-specific signaling, of each target cell.

With reference to the first possible implementation manner of the first aspect, in a second possible implementation manner, the user equipment-specific signaling includes radio resource control higher layer signaling, or dynamic layer-1 signaling.

With reference to the first aspect, the first possible implementation manner of the first aspect, or the second possible implementation manner of the first aspect, in a third possible implementation manner, each piece of the reference signal resource configuration information of the target cell corresponds to one precoding matrix.

With reference to the first aspect, the first possible implementation manner of the first aspect, the second possible implementation manner of the first aspect, or the third possible implementation manner of the first aspect, in a fourth possible implementation manner, the target cell includes the serving cell.

With reference to the first aspect, the first possible implementation manner of the first aspect, the second possible implementation manner of the first aspect, the third possible implementation manner of the first aspect, or the fourth possible implementation manner of the first aspect, in a fifth possible implementation manner, the reporting a channel measurement result of the target cell to a serving cell includes any one of the following:
reporting, to the serving cell, channel quality measurement information corresponding to each piece of reference signal resource configuration information configured for the target cell; or
reporting, to the serving cell, channel quality measurement information corresponding to a channel quality measurement information average value of the target cell, where the channel quality measurement information average value is an average value of channel quality measurement information corresponding to all reference signal resource configuration information configured for the target cell; or
reporting, to the serving cell, channel quality measurement information corresponding to a channel quality measurement information maximum value of the target cell, where the channel quality measurement information maximum value is a maximum value of channel quality measurement information corresponding to all reference signal resource configuration information configured for the target cell; or
reporting, in a form of a bitmap to the serving cell, channel quality measurement information corresponding to at least one piece of reference signal resource configuration information configured for the target cell.

According to a second aspect, an embodiment of the present invention provides a channel measurement method, including:
performing, according to beams having different downtilts, weighting on signals of all antennas by using different weighting factors, to separately obtain different reference signal resource configuration information, where each piece of the reference signal resource configuration information corresponds to a beam having a different downtilt; and
sending at least two pieces of the reference signal resource configuration information to user equipment, so that the user equipment performs channel measurement.

With reference to the second aspect, in a first possible implementation manner, each piece of the reference signal resource configuration information corresponds to one precoding matrix.

According to a third aspect, an embodiment of the present invention provides a cell handover method, including:
receiving a channel measurement result of a target cell reported by user equipment, where the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1; and determining, according to the channel measurement result, whether cell handover needs to be performed for the user equipment.

With reference to the third aspect, in a first possible implementation manner, the target cell includes a serving cell of the user equipment.

With reference to the third aspect or the first possible implementation manner of the third aspect, in a second possible implementation manner, the receiving a channel measurement result of a target cell reported by user equipment includes any one of the following:
receiving channel quality measurement information reported by the user equipment and corresponding to each piece of reference signal resource configuration information configured for the target cell; or
receiving channel quality measurement information reported by the user equipment and corresponding to a channel quality measurement information average value of the target cell, where the channel quality measurement information average value is an average value of channel quality measurement information corresponding to all reference signal resource configuration information configured for the target cell; or
receiving channel quality measurement information reported by the user equipment and corresponding to a channel quality measurement information maximum value of the target cell, where the channel quality measurement information maximum value is a maximum value of channel quality measurement information corresponding to all reference signal resource configuration information configured for the target cell; or
receiving channel quality measurement information reported by the user equipment in a form of a bitmap and corresponding to at least one piece of reference signal resource configuration information configured for the target cell.

With reference to the third aspect, the first possible implementation manner of the third aspect, or the second possible implementation manner of the third aspect, in a third possible implementation manner, each piece of the reference signal resource configuration information corresponds to one precoding matrix.

With reference to the third aspect, the first possible implementation manner of the third aspect, the second possible implementation manner of the third aspect, or the third possible implementation manner of the third aspect, in a fourth possible implementation manner, when the received channel measurement result of the target cell reported by the user equipment corresponds to at least two pieces of the reference signal resource configuration information, the determining, according to the channel measurement result, whether cell handover needs to be performed for the user equipment includes:
when it is determined, according to the at least two pieces of the reference signal resource configuration information corresponding to the channel measurement result, that channel quality of the target cell is higher than channel quality of a current serving cell, selecting a target cell having highest channel quality to perform cell handover for the user equipment.

With reference to the second possible implementation manner of the third aspect, in a fifth possible implementation manner, when channel quality measurement information reported by the user equipment and corresponding to channel quality measurement information average values of at least two target cells is received, the determining, according to the channel measurement result, whether cell handover needs to be performed for the user equipment includes:
selecting a target cell that has a largest channel quality measurement information average value among the at least two target cells; and
when it is determined, according to channel quality measurement information corresponding to the selected target cell, that channel quality of the target cell is higher than channel quality of a current serving cell, selecting the target cell, and performing cell handover for the user equipment.

With reference to the second possible implementation manner of the third aspect, in a sixth possible implementation manner, when channel quality measurement information reported by the user equipment and corresponding to channel quality measurement information maximum values of at least two target cells is received, the determining, according to the channel measurement result, whether cell handover needs to be performed for the user equipment includes:
selecting a target cell that has a largest channel quality measurement information maximum value among the at least two target cells; and
when it is determined, according to channel quality measurement information corresponding to the selected target cell, that channel quality of the target cell is higher than channel quality of a current serving cell, selecting the target cell, and performing cell handover for the user equipment.

According to a fourth aspect, an embodiment of the present invention provides a channel measurement apparatus, including:
a first receiving module, configured to receive reference signal resource configuration information of a target cell, where a quantity of pieces of the reference signal resource configuration information of the target cell is greater than 1;
a first channel measurement module, configured to perform channel measurement on the target cell according to the reference signal resource configuration information received by the first receiving module; and
a reporting module, configured to report a channel measurement result of the target cell to a serving cell.

With reference to the fourth aspect, in a first possible implementation manner, the first receiving module includes:
a first receiving unit, configured to receive reference signal resource configuration information, which is notified by means of broadcast, of each target cell; and/or
a second receiving unit, configured to receive reference signal resource configuration information, which is notified by the serving cell by using user equipment-specific signaling, of each target cell.

With reference to the first possible implementation manner of the fourth aspect, in a second possible implementation manner, the specific signaling includes radio resource control higher layer signaling, or dynamic layer-1 signaling.

With reference to the fourth aspect, the first possible implementation manner of the fourth aspect, or the second possible implementation manner of the fourth aspect, in a third possible implementation manner, each piece of the reference signal resource configuration information of the target cell corresponds to one precoding matrix.

With reference to the fourth aspect, the first possible implementation manner of the fourth aspect, the second possible implementation manner of the fourth aspect, or the third possible implementation manner of the fourth aspect, in a fourth possible implementation manner, the target cell includes the serving cell.

With reference to the fourth aspect, the first possible implementation manner of the fourth aspect, the second possible implementation manner of the fourth aspect, the third possible implementation manner of the fourth aspect, or the fourth possible implementation manner of the fourth aspect, in a fifth possible implementation manner, the reporting module includes any one or more of the following units:
a first reporting unit, configured to report, to the serving cell, channel quality measurement information corresponding to each piece of reference signal resource configuration information configured for the target cell;
a second reporting unit, configured to report, to the serving cell, channel quality measurement information corresponding to a channel quality measurement information average value of the target cell, where the channel quality measurement information average value is an average value of channel quality measurement information corresponding to all reference signal resource configuration information configured for the target cell;
a third reporting unit, configured to report, to the serving cell, channel quality measurement information corresponding to a channel quality measurement information maximum value of the target cell, where the channel quality measurement information maximum value is a maximum value of channel quality measurement information corresponding to all reference signal resource configuration information configured for the target cell; and
a fourth reporting unit, configured to report, in a form of a bitmap to the serving cell, channel quality measurement information corresponding to at least one piece of reference signal resource configuration information configured for the target cell.

According to a fifth aspect, an embodiment of the present invention provides a channel measurement device, including:
a configuration information generation module, configured to perform, according to beams having different downtilts, weighting on signals of all antennas by using different weighting factors, to separately obtain different reference signal resource configuration information, where each piece of the reference signal resource configuration information corresponds to a beam having a different downtilt; and
a configuration information sending module, configured to send at least two pieces of the reference signal resource configuration information to user equipment, so that the user equipment performs channel measurement.

With reference to the fifth aspect, in a first possible implementation manner, each piece of the reference signal resource configuration information corresponds to one precoding matrix.

According to a sixth aspect, an embodiment of the present invention provides a cell handover apparatus, including:
a channel measurement result receiving module, configured to receive a channel measurement result of a target cell reported by user equipment, where the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1; and
a handover determining module, configured to determine, according to the channel measurement result received by the channel measurement result receiving module, whether cell handover needs to be performed for the user equipment.

With reference to the sixth aspect, in a first possible implementation manner, the cell handover apparatus further includes:
a sending module, configured to send, by means of broadcast or by using user equipment-specific signaling, at least one piece of reference signal resource configuration information of each target cell including a current serving cell to the user equipment.

With reference to the sixth aspect or the first possible implementation manner of the sixth aspect, in a second possible implementation manner, that the channel measurement result receiving module receives a channel measurement result of a target cell reported by user equipment includes any one of the following:
receiving channel quality measurement information reported by the user equipment and corresponding to each piece of reference signal resource configuration information configured for the target cell; or
receiving channel quality measurement information reported by the user equipment and corresponding to a channel quality measurement information average value of the target cell, where the channel quality measurement information average value is an average value of channel quality measurement information corresponding to all reference signal resource configuration information configured for the target cell; or
receiving channel quality measurement information reported by the user equipment and corresponding to a channel quality measurement information maximum value of the target cell, where the channel quality measurement information maximum value is a maximum value of channel quality measurement information corresponding to all reference signal resource configuration information configured for the target cell; or
receiving channel quality measurement information reported by the user equipment in a form of a bitmap and corresponding to at least one piece of reference signal resource configuration information configured for the target cell.

With reference to the sixth aspect, the first possible implementation manner of the sixth aspect, or the second possible implementation manner of the sixth aspect, in a third possible implementation manner, when the channel measurement result of the target cell reported by the user equipment and received by the channel measurement result receiving module corresponds to at least two pieces of the reference signal resource configuration information, the handover determining module is specifically configured to:
when it is determined, according to the at least two pieces of the reference signal resource configuration information corresponding to the channel measurement result, that channel quality of the target cell is higher than channel quality of the current serving cell, select a target cell having highest channel quality to perform cell handover for the user equipment.

With reference to the second possible implementation manner of the sixth aspect, in a fourth possible implementation manner, when the channel measurement result receiving module receives channel quality measurement information reported by the user equipment and corresponding to channel quality measurement information average values of at least two target cells, the handover determining module includes:
a first selection unit, configured to select a target cell that has a largest channel quality measurement information average value among the at least two target cells; and
a first selection and handover unit, configured to: when it is determined, according to channel quality measurement information corresponding to the selected target cell, that channel quality of the target cell is higher than channel quality of the current serving cell, select the target cell, and perform cell handover for the user equipment.

With reference to the second possible implementation manner of the sixth aspect, in a fifth possible implementation manner, when the channel measurement result receiving module receives channel quality measurement information reported by the user equipment and corresponding to channel quality measurement information maximum values of at least two target cells, the handover determining module includes:
a second selection unit, configured to select a target cell that has a largest channel quality measurement information maximum value among the at least two target cells; and
a second selection and handover unit, configured to: when it is determined, according to channel quality measurement information corresponding to the selected target cell, that channel quality of the target cell is higher than channel quality of the current serving cell, select the target cell, and perform cell handover for the user equipment.

According to a seventh aspect, an embodiment of the present invention provides a network device, including a receiver and a processor, where
the receiver receives reference signal resource configuration information of a target cell, where a quantity of pieces of the reference signal resource configuration information of the target cell is greater than 1; and
the processor performs channel measurement on the target cell according to the reference signal resource configuration information, and reports a channel measurement result of the target cell to a serving cell.

With reference to the seventh aspect, in a first possible implementation manner, that the receiver receives reference signal resource configuration information of each target cell includes:
the receiver receives the reference signal resource configuration information, which is notified by means of broadcast, of each target cell; or
the receiver receives the reference signal resource configuration information, which is notified by the serving cell by using user equipment-specific signaling, of each target cell.

With reference to the first possible implementation manner of the seventh aspect, in a second possible implementation manner, the user equipment-specific signaling includes radio resource control higher layer signaling, or dynamic layer-1 signaling.

With reference to the seventh aspect, the first possible implementation manner of the seventh aspect, or the second possible implementation manner of the seventh aspect, in a third possible implementation manner, each piece of the reference signal resource configuration information of the target cell corresponds to one precoding matrix.

With reference to the seventh aspect, the first possible implementation manner of the seventh aspect, the second possible implementation manner of the seventh aspect, or the third possible implementation manner of the seventh aspect, in a fourth possible implementation manner, the target cell includes the serving cell.

With reference to the seventh aspect, the first possible implementation manner of the seventh aspect, the second possible implementation manner of the seventh aspect, the third possible implementation manner of the seventh aspect, or the fourth possible implementation manner of the seventh aspect, in a fifth possible implementation manner, that the processor reports a channel measurement result of the target cell to the serving cell includes any one of the following steps:
reporting, to the serving cell, channel quality measurement information corresponding to each piece of reference signal resource configuration information configured for the target cell; or
reporting, to the serving cell, channel quality measurement information corresponding to a channel quality measurement information average value of the target cell, where the channel quality measurement information average value is an average value of channel quality measurement information corresponding to all reference signal resource configuration information configured for the target cell; or
reporting, to the serving cell, channel quality measurement information corresponding to a channel quality measurement information maximum value of the target cell, where the channel quality measurement information maximum value is a maximum value of channel quality measurement information corresponding to all reference signal resource configuration information configured for the target cell; or
reporting, in a form of a bitmap to the serving cell, channel quality measurement information corresponding to at least one piece of reference signal resource configuration information configured for the target cell.

According to an eighth aspect, an embodiment of the present invention provides a network device, including: an input apparatus, an output apparatus, a memory, and a processor, where
the processor executes the following steps:
performing, according to beams having different downtilts, weighting on signals of all antennas by using different weighting factors, to separately obtain different reference signal resource configuration information, where each piece of the reference signal resource configuration information corresponds to a beam having a different downtilt; and sending at least two pieces of the reference signal resource configuration information to user equipment by using the output apparatus, so that the user equipment performs channel measurement.

With reference to the eighth aspect, in a first possible implementation manner, each piece of the reference signal resource configuration information corresponds to one precoding matrix.

According to a ninth aspect, an embodiment of the present invention provides a base station device, including a receiver and a processor, where
the receiver receives a channel measurement result of a target cell reported by user equipment, where the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1; and the processor executes the following step:
determining, according to the channel measurement result, whether cell handover needs to be performed for the user equipment.

With reference to the ninth aspect, in a first possible implementation manner, the processor further executes the following step:
sending, by means of broadcast or by using user equipment-specific signaling, at least one piece of reference signal resource configuration information of each target cell including a current serving cell to the user equipment.

With reference to the ninth aspect or the first possible implementation manner of the ninth aspect, in a second possible implementation manner, that the receiver receives a channel measurement result of a target cell reported by user equipment includes any one of the following:
receiving channel quality measurement information reported by the user equipment and corresponding to each piece of reference signal resource configuration information configured for the target cell; or
receiving channel quality measurement information reported by the user equipment and corresponding to a channel quality measurement information average value of the target cell, where the channel quality measurement information average value is an average value of channel quality measurement information corresponding to all reference signal resource configuration information configured for the target cell; or
receiving channel quality measurement information reported by the user equipment and corresponding to a channel quality measurement information maximum value of the target cell, where the channel quality measurement information maximum value is a maximum value of channel quality measurement information corresponding to all reference signal resource configuration information configured for the target cell; or
receiving channel quality measurement information reported by the user equipment in a form of a bitmap and corresponding to at least one piece of reference signal resource configuration information configured for the target cell.

With reference to the ninth aspect, the first possible implementation manner of the ninth aspect, or the second possible implementation manner of the ninth aspect, in a third possible implementation manner, when the channel measurement result of the target cell reported by the user equipment and received by the receiver corresponds to at least two pieces of the reference signal resource configuration information, the determining, by the processor, according to the channel measurement result, whether cell handover needs to be performed for the user equipment includes:
when it is determined, according to the at least two pieces of the reference signal resource configuration information corresponding to the channel measurement result, that channel quality of the target cell is higher than channel quality of the current serving cell, selecting a target cell having highest channel quality to perform cell handover for the user equipment.

With reference to the second possible implementation manner of the ninth aspect, in a fourth possible implementation manner, when the receiver receives channel quality measurement information reported by the user equipment and corresponding to channel quality measurement information average values of at least two target cells, the determining, by the processor, according to the channel measurement result, whether cell handover needs to be performed for the user equipment includes:
selecting a target cell that has a largest channel quality measurement information average value among the at least two target cells; and when it is determined, according to channel quality measurement information corresponding to the selected target cell, that channel quality of the target cell is higher than channel quality of the current serving cell, selecting the target cell, and performing cell handover for the user equipment.

With reference to the second possible implementation manner of the ninth aspect, in a fifth possible implementation manner, when the receiver receives channel quality measurement information reported by the user equipment and corresponding to channel quality measurement information maximum values of at least two target cells, the determining, by the processor, according to the channel measurement result, whether cell handover needs to be performed for the user equipment includes:
selecting a target cell that has a largest channel quality measurement information maximum value among the at least two target cells; and when it is determined, according to channel quality measurement information corresponding to the selected target cell, that channel quality of the target cell is higher than channel quality of the current serving cell, selecting the target cell, and performing cell handover for the user equipment.

According to a tenth aspect, an embodiment of the present invention provides a cell handover system, including a base station device and a first network device, where
the first network device is the network device according to the seventh aspect, the first possible implementation manner of the seventh aspect, the second possible implementation manner of the seventh aspect, the third possible implementation manner of the seventh aspect, the fourth possible implementation manner of the seventh aspect, or the fifth possible implementation manner of the seventh aspect; and
the base station device is the base station device according to the ninth aspect, the first possible implementation manner of the ninth aspect, the second possible implementation manner of the ninth aspect, the third possible implementation manner of the ninth aspect, the fourth possible implementation manner of the ninth aspect, the fifth possible implementation manner of the ninth aspect, or the sixth possible implementation manner of the ninth aspect.

With reference to the tenth aspect, in a first possible implementation manner, the cell handover system further includes a second network device, where
the second network device is the network device according to the eighth aspect or the first possible implementation manner of the eighth aspect.

By means of implementation of the embodiments of the present invention, reference signal resource configuration information of a target cell is acquired, and channel measurement is performed on the target cell according to each piece of reference signal resource configuration information, where each piece of the reference signal resource configuration information corresponds to a beam having a different downtilt, which resolves a problem in the prior art that channel quality of beams, having different downtilts, of a target cell cannot be obtained; and a channel measurement result, of a beam having a downtilt, of the target cell is reported to a serving cell to perform cell handover, which greatly optimizes cell handover, improves resource utilization or spectral efficiency, improves a system capacity, and better implements dynamic changes in coverage of cells.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic principle diagram of horizontal beamforming of horizontal antenna configuration in the prior art;
FIG. 2 is a schematic principle diagram of three-dimensional beamforming of two-dimensional antenna configuration in the prior art;
FIG. 3 is a schematic structural diagram of a heterogeneous network of a macro cell and a micro cell in the prior art;
FIG. 4 is a schematic principle diagram of applying three-dimensional beamforming in a heterogeneous network in the prior art;
FIG. 5 is a schematic flowchart of a first embodiment of a channel measurement method according to the present invention;
FIG. 6 is a schematic flowchart of a second embodiment of a channel measurement method according to the present invention;
FIG. 7 is a schematic flowchart of a third embodiment of a channel measurement method according to the present invention;
FIG. 8 is a schematic flowchart of a cell handover method according to an embodiment of the present invention;
FIG. 9 is a schematic structural diagram of a first embodiment of a channel measurement apparatus according to the present invention;
FIG. 10 is a schematic structural diagram of a first receiving module according to an embodiment the present invention;
FIG. 11 is a schematic structural diagram of a second embodiment of a channel measurement apparatus according to the present invention;
FIG. 12 is a schematic structural diagram of a reporting module according to an embodiment the present invention;
FIG. 13 is a schematic structural diagram of a channel measurement device according to an embodiment of the present invention;
FIG. 14 is a schematic structural diagram of a cell handover apparatus according to an embodiment the present invention;
FIG. 15 is a schematic structural diagram of a first embodiment of a handover determining module according to the present invention;
FIG. 16 is a schematic structural diagram of a second embodiment of a handover determining module according to the present invention;
FIG. 17 is a schematic structural diagram of a first embodiment of a network device according to the present invention;
FIG. 18 is a schematic structural diagram of a second embodiment of a network device according to the present invention;
FIG. 19 is a schematic structural diagram of a base station device according to an embodiment of the present invention; and
FIG. 20 is a schematic structural diagram of a cell handover system according to an embodiment the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

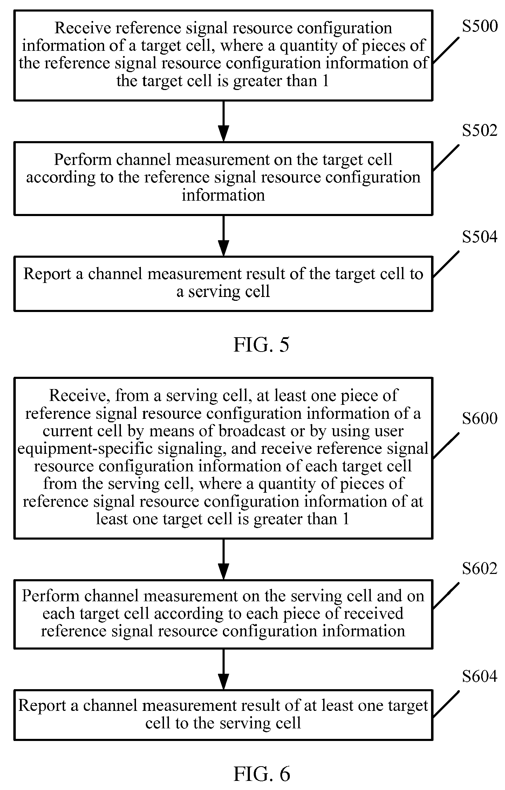

Refer to FIG. 5, which is a schematic flowchart of a first embodiment of a channel measurement method according to the present invention. The method includes:
Step S500: Receive reference signal resource configuration information of a target cell, where a quantity of pieces of the reference signal resource configuration information of the target cell is greater than 1.

Specifically, multiple pieces of the reference signal resource configuration information may be configured for a cell, and each piece of the reference signal resource configuration information of the cell corresponds to a beam, having a particular downtilt, of the cell, that is, information about beams, having different downtilts, in the cell may be represented by the sent reference signal resource configuration information. More specifically, each piece of the reference signal resource configuration information of the cell may be generated by using a different weighting factor for a signal of each antenna of the cell, for example, for two-dimensional antenna configuration, beams having different downtilts may be obtained by performing weighting on signals of all antennas, and the beams having different downtilts may be generated by using different weighting factors. Therefore, multiple pieces of reference signal resource configuration information may be configured for the cell, and each piece of the reference signal resource configuration information of the target cell may correspond to one precoding matrix of the target cell. Specifically, when different reference signals are sent, a different weighting factor may be used for each different antenna.

In further detail, description is provided below by using a channel state information reference signal (Channel State Information Reference Signal, CSI-RS) as an example, but this embodiment of the present invention is not limited to the CSI-RS; a pilot resource of another type such as a demodulation reference signal (Demodulation Reference Signal, DM RS) or a sounding reference signal (Sounding Reference Signal, SRS) may also be used. For example, a base station eNB configures a CSI-RS resource 1 (that is, one piece of the reference signal resource configuration information) and a CSI-RS resource 2 (that is, another piece of the reference signal resource configuration information) in the cell, where each CSI-RS resource may include a quantity of CSI-RS ports, and each CSI-RS port corresponds to a time-frequency location of a reference signal and sequence information of a CSI-RS. A different weighting factor is used for a signal of each antenna of the cell, a downtilt corresponding to each CSI-RS beam in the CSI-RS resource 1 is configured to be A, and a downtilt corresponding to each CSI-RS beam in the CSI-RS resource 2 is configured to be B.

After the foregoing configuration is completed, in step S500, UE may receive reference signal resource configuration information of each target cell, and a quantity of pieces of the reference signal resource configuration information of at least one target cell is greater than 1, that is, multiple pieces of reference signal resource configuration information may be configured for some target cells, and only one piece of the reference signal resource configuration information may be configured for some cells.

Step S502: Perform channel measurement on the target cell according to the reference signal resource configuration information.

Specifically, a measurement result of each reference signal may be a channel quality indicator (channel quality indicator, CQI), reference signal received power (Reference Signal Receiving Power, RSRP), reference signal received quality (Reference Signal Received Quality, RSRQ), a received signal strength indicator (Received Signal Strength Indication, RSSI), or the like.

Step S504: Report a channel measurement result of the target cell to a serving cell.

Specifically, UE may report a channel measurement result of each target cell to the serving cell, or may preferably report channel measurement results of some target cells according to a specific situation. After receiving a channel measurement result of at least one target cell reported by the UE, the current serving cell of the UE may determine whether cell handover needs to be performed for the UE, a target cell to which the UE is to be handed over, and a service area, in the target cell, of a beam having an optimal downtilt.

Further, step S500 may be specifically:

The UE receives the reference signal resource configuration information, which is notified by the serving cell by means of broadcast, of each target cell; or the UE receives the reference signal resource configuration information, which is notified by the serving cell by using user equipment-specific signaling, of each target cell.

Specifically, the specific signaling may include radio resource control (Radio Resource Control, RRC) higher layer signaling, or dynamic layer-1 signaling.

Refer to FIG. 6, which is a schematic flowchart of a second embodiment of a channel measurement method according to the present invention. The method includes:
Step S600: Receive, from a serving cell, at least one piece of reference signal resource configuration information of a current cell by means of broadcast or by using user equipment-specific signaling, and receive reference signal resource configuration information of each target cell from the serving cell, where a quantity of pieces of reference signal resource configuration information of at least one target cell is greater than 1.

Specifically, the target cell in this embodiment of the present invention includes the serving cell, that is, UE may obtain multiple pieces of the reference signal resource configuration information of the serving cell of the UE or the current cell, and the serving cell configures the reference signal resource configuration information by means of broadcast or by using the UE-specific signaling.

Description is provided below by using a CSI-RS as an example again. A CSI-RS resource 1 and a CSI-RS resource 2 may be configured by the serving cell in a cell-specific manner (that is, configuration information is notified to the UE in the cell by means of broadcast), or in a UE-specific manner (that is, configuration information is sent to different UEs by using UE-specific signaling, which may be RRC (radio resource control) higher layer signaling or dynamic layer-1 signaling). For the UE-specific manner for CSI-RS resource configuration, an eNB may configure a CSI-RS resource for the UE according to a location of the UE, for example, a location of UE 1 is under coverage of a beam having a downtilt A, then the eNB configures the CSI-RS resource 1 for the UE 1, and the UE 1 performs measurement and feedback according to the configured CSI-RS resource 1.

For the step of receiving the reference signal resource configuration information of each target cell from the serving cell, reference may be made to descriptions of the previous embodiment, and details are not described herein again.

Step S602: Perform channel measurement on the serving cell and on each target cell according to each piece of received reference signal resource configuration information.

Step S604: Report a channel measurement result of at least one target cell to the serving cell.

Specifically, UE may report a channel measurement result of the current serving cell and a channel measurement result of at least one target cell to the serving cell, so that the serving cell determines whether cell handover needs to be performed for the UE, a target cell to which the UE is to be handed over, and a service area, in the target cell, of a beam having an optimal downtilt.

It should be noted that, each piece of reference signal resource configuration information in this embodiment of the present invention may correspond to one precoding matrix, and may specifically include a cell ID, precoding matrix information, time-frequency resource location information, a quantity of ports, a pilot sequence, and the like. The precoding matrix information includes information about a weighting factor used for a current piece of reference signal resource configuration information, that is, information, which corresponds to the current piece of reference signal resource configuration information, about a beam having a downtilt.

Still further, step S504 of the foregoing embodiment or step S604 may include any one of following A, B, C, and D, that is, a method for reporting a channel measurement result to the serving cell by the UE may be one of the following four methods:
A. Report, to the serving cell, channel quality measurement information corresponding to each piece of reference signal resource configuration information configured for the target cell.
   Specifically, UE may report a channel measurement result of each target cell to the serving cell, or may preferably report channel measurement results of some target cells according to a specific situation. When the UE reports all channel measurement results to the serving cell, for example, if the channel measurement result is RSRP, the UE reports, to the serving cell, measured RSRP corresponding to each piece of reference signal resource configuration information configured for each target cell; subsequently, the serving cell determines, according to each piece of received RSRP, whether cell handover needs to be performed for the UE, a target cell to which the UE is to be handed over, and a service area, in the target cell, of a beam having an optimal downtilt.
B. Report, to the serving cell, channel quality measurement information corresponding to a channel quality measurement information average value of the target cell, where the channel quality measurement information average value is an average value of channel quality measurement information corresponding to all reference signal resource configuration information configured for the target cell.
   Specifically, the UE does not report all channel measurement results to the serving cell, but may report, corresponding to at least one target cell, only channel quality measurement information corresponding to one channel quality measurement information average value, that is, channel quality measurement information corresponding to one average value of a measurement result of the target cell is reported. For example, if the channel measurement result is RSRP, the UE calculates an average value of RSRP corresponding to all pieces of reference signal resource configuration information, and then may use RSRP that is closest to the average value as channel quality measurement information corresponding to the average value and report the channel quality measurement information. It may be understood that, when the channel measurement result is a CQI, a CQI that is closest to the average value may be used as channel quality measurement information corresponding to the average value for reporting. Compared with the foregoing solution A, a reporting amount is greatly reduced. Subsequently, the serving cell determines, according to the received average value of the at least one target cell, whether cell handover needs to be performed for the UE.
   It may be understood that, in this embodiment of the present invention, each target cell corresponds to a respective channel measurement result, and one channel quality measurement information average value corresponds to only one target cell, that is, one channel quality measurement information average value is an average value of correspondingly reported measurement results of one target cell. For example, when the UE reports, to the serving cell, channel quality measurement information corresponding to channel quality measurement information average values of two target cells (a target cell A and a target cell B), then the UE reports channel quality measurement information corresponding to a correspondingly measured channel quality measurement information average value of the target cell A, and reports channel quality measurement information corresponding to a correspondingly measured channel quality measurement information average value of the target cell B. The corresponding channel quality measurement information may include precoding matrix information, so that cell handover is performed on a network side.
C. Report, to the serving cell, channel quality measurement information corresponding to a channel quality measurement information maximum value of the target cell, where the channel quality measurement information maximum value is a maximum value of channel quality measurement information corresponding to each piece of reference signal resource configuration information configured for the target cell.
   Specifically, the UE does not report all channel measurement results to the serving cell, but reports, corresponding to at least one target cell, only channel quality measurement information corresponding to one channel quality measurement information maximum value, that is, channel quality measurement information corresponding to a maximum value in measurement results of the target cell is reported. For example, if the channel measurement result is RSRP, the UE selects channel quality measurement information corresponding to a maximum value in RSRP corresponding to each piece of reference signal resource configuration information and reports the channel quality measurement information. Compared with the foregoing solution A, a reporting amount is greatly reduced. Subsequently, the serving cell determines, according to the received channel quality measurement information maximum value of the at least one target cell, whether cell handover needs to be performed for the UE, a target cell to which the UE is to be handed over, and a service area, in the target cell, of a beam having an optimal downtilt. If handover is needed, channel quality measurement information maximum values of target cells are compared to obtain a largest channel quality measurement information maximum value, and the UE is handed over to the target cell that has the largest channel quality measurement information maximum value.
   It may be understood that, in this embodiment of the present invention, each target cell corresponds to a respective channel measurement result, and one channel quality measurement information maximum value corresponds to only one target cell, that is, one channel quality measurement information maximum value is a maximum value of correspondingly reported measurement results of one target cell. For example, when the UE reports, to the serving cell, channel quality measurement information corresponding to channel quality measurement information maximum values of two target cells (a target cell C and a target cell D), then the UE reports channel quality measurement information corresponding to a correspondingly measured channel quality measurement information maximum value of the target cell C, and reports channel quality measurement information corresponding to a correspondingly measured channel quality measurement information maximum value of the target cell D.
D. Report, in a form of a bitmap Bitmap to the serving cell, channel quality measurement information corresponding to at least one piece of reference signal resource configuration information configured for the target cell.

Specifically, the UE may selectively report reference signal resource configuration information in at least one target cell, but not report each piece of reference signal resource configuration information in each target cell, and a form of a Bitmap is used to indicate that channel quality measurement information corresponding to which pieces of reference signal resource configuration information in which target cells is reported. For example, the Bitmap shown below may be used for indication:
1010 1011 001 011...

Each Bit in the foregoing Bitmap represents one piece of reference signal resource configuration information, 1 represents that channel quality measurement information corresponding to this piece of reference signal resource configuration information is reported, 0 represents that the channel quality measurement information corresponding to this piece of reference signal resource configuration information is not reported, and each underline represents multiple pieces of reference signal resource configuration information of one target cell. That is, the first underline 1010 represents that four pieces of reference signal resource configuration information are configured for this target cell, where only the first piece and the third piece of reference signal resource configuration information are reported; the second underline 1011 represents that four pieces of reference signal resource configuration information are configured for this target cell, where the first piece, the third piece, and the fourth piece of reference signal resource configuration information are reported, and the second piece of reference signal resource configuration information is not reported; and the third underline 001 represents that three pieces of reference signal resource configuration information are configured for this target cell, where only the third piece of reference signal resource configuration information is reported.

The serving cell acquires and parses out channel quality measurement information corresponding to the reported pieces of reference signal resource configuration information, and determines whether cell handover needs to be performed for the UE, a target cell to which the UE is to be handed over, and a service area, in the target cell, of a beam having an optimal downtilt.

By means of implementation of this embodiment of the present invention, reference signal resource configuration information of a target cell is acquired, and channel measurement is performed on the target cell according to each piece of reference signal resource configuration information, where each piece of the reference signal resource configuration information corresponds to a beam having a different downtilt, which resolves a problem in the prior art that channel quality of beams, having different downtilts, of a target cell cannot be obtained; and a channel measurement result, of a beam having a downtilt, of the target cell is reported to a serving cell to perform cell handover, which greatly optimizes cell handover, improves resource utilization or spectral efficiency, improves a system capacity, and better implements dynamic changes in coverage of cells.

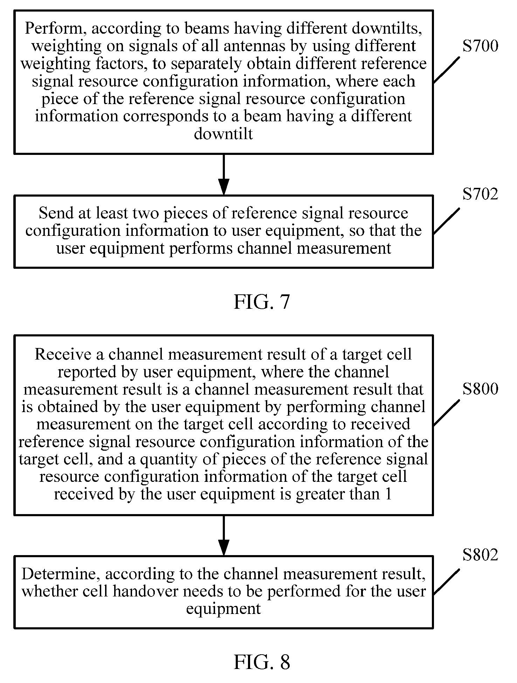

To help better implement the foregoing solutions of the embodiments of the present invention, the present invention correspondingly further provides a channel measurement method. FIG. 7 is a schematic flowchart of a third embodiment of a channel measurement method according to the present invention, and the method includes:
Step S700: Perform, according to beams having different downtilts, weighting on signals of all antennas by using different weighting factors, to separately obtain different reference signal resource configuration information, where each piece of the reference signal resource configuration information corresponds to a beam having a different downtilt.
Step S702: Send at least two pieces of the reference signal resource configuration information to user equipment, so that the user equipment performs channel measurement.

Specifically, each piece of the reference signal resource configuration information corresponds to one precoding matrix. Multiple pieces of reference signal resource configuration information may be configured for a cell, and each piece of the reference signal resource configuration information of the cell corresponds to a beam, having a downtilt, of the cell, that is, information about beams, having different downtilts, in the cell may be represented by the sent reference signal resource configuration information. More specifically, each piece of reference signal resource configuration information of the cell may be generated by using a different weighting factor for a signal of each antenna of the cell, for example, for two-dimensional antenna configuration, beams having different downtilts may be obtained by performing weighting on signals of all antennas, and the beams having different downtilts may be generated by using different weighting factors. Therefore, multiple pieces of reference signal resource configuration information may be configured for the cell, and each piece of the reference signal resource configuration information of the target cell may correspond to one precoding matrix of the target cell. Specifically, when different reference signals are sent, a different weighting factor may be used for each different antenna.

In further detail, description is provided below by using a CSI-RS as an example, but this embodiment of the present invention is not limited to the CSI-RS; a pilot resource of another type such as a DM RS or an SRS may also be used. For example, a base station eNB configures a CSI-RS resource 1 (that is, one piece of reference signal resource configuration information) and a CSI-RS resource 2 (that is, another piece of the reference signal resource configuration information) in the cell, where each CSI-RS resource may include a quantity of CSI-RS ports, and each CSI-RS port corresponds to a time-frequency location of a reference signal and sequence information of a CSI-RS. A different weighting factor is used for a signal of each antenna of the cell, a downtilt corresponding to each CSI-RS beam in the CSI-RS resource 1 is configured to be A, and a downtilt corresponding to each CSI-RS beam in the CSI-RS resource 2 is configured to be B.

After the foregoing configuration is completed, in step S702, a network device such as the base station eNB may send at least two pieces of the reference signal resource configuration information to UE, so that the user equipment performs channel measurement.

To help better implement the foregoing solutions of the embodiments of the present invention, the present invention correspondingly further provides a cell handover method. FIG. 8 is a schematic flowchart of a cell handover method according to an embodiment of the present invention, and the method includes:
Step S800: Receive a channel measurement result of a target cell reported by user equipment, where the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1.

Specifically, the target cell may include a serving cell of the user equipment. A current serving cell may also send, by means of broadcast or by using user equipment-specific signaling, at least one piece of reference signal resource configuration information of the current serving cell or another target cell to the user equipment. The specific signaling may include RRC higher layer signaling, or dynamic layer-1 signaling. For how the UE measures and reports the channel measurement result, refer to the foregoing embodiments of FIG. 5 and FIG. 6, and details are not described herein again.

Step S802: Determine, according to the channel measurement result, whether cell handover needs to be performed for the user equipment.

Specifically, the serving cell compares the channel measurement result of the target cell reported by the UE with the channel measurement result of the current serving cell reported by the UE, to determine whether handover needs to be performed. For example, if it is found that channel quality of the target cell is higher than channel quality of the serving cell, the serving cell determines that handover may be performed; or if a difference between channel quality of the target cell and channel quality of the serving cell satisfies a particular threshold, it may be determined that handover is to be performed.

More specifically, when the serving cell determines that cell handover needs to be performed for the UE, the serving cell may send, to the target cell, reference signal information, which corresponds to highest channel quality in the target cell, of the UE, and finally completes handover from the current serving cell to the target cell; for example, identifier information in the reference signal resource configuration information may be sent to the target cell, and the serving cell may perform sending by using an X2 interface between base stations.

By means of implementation of this embodiment of the present invention, reference signal resource configuration information of a target cell is acquired, and channel measurement is performed on the target cell according to each piece of reference signal resource configuration information, where each piece of the reference signal resource configuration information corresponds to a beam having a different downtilt, which resolves a problem in the prior art that channel quality of beams, having different downtilts, of a target cell cannot be obtained; and a channel measurement result, of a beam having a downtilt, of the target cell is reported to a serving cell to perform cell handover, which greatly optimizes cell handover, improves resource utilization or spectral efficiency, improves a system capacity, and better implements dynamic changes in coverage of cells.

To help better implement the foregoing solutions of the embodiments of the present invention, related apparatuses that are used for implementing the foregoing solutions in a cooperative manner are further provided below.

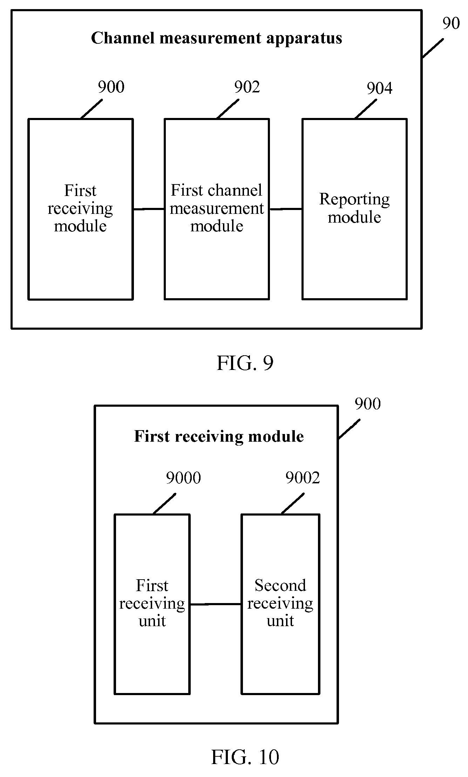

Refer to a schematic structural diagram, shown in FIG. 9, of a first embodiment of a channel measurement apparatus according to the present invention. A channel measurement apparatus 90 includes: a first receiving module 900, a first channel measurement module 902, and a reporting module 904.

The first receiving module 900 is configured to receive reference signal resource configuration information of a target cell, where a quantity of pieces of the reference signal resource configuration information of the target cell is greater than 1.

The first channel measurement module 902 is configured to perform channel measurement on the target cell according to the reference signal resource configuration information received by the first receiving module 900.

The reporting module 904 is configured to report a channel measurement result of the target cell to a serving cell.

Further, with reference to a schematic structural diagram, shown in FIG. 10, of the first receiving module of this embodiment the present invention, a structure of the channel measurement apparatus 90 in this embodiment of the present invention is described in detail. The first receiving module 900 includes: a first receiving unit 9000 and/or a second receiving unit 9002. As an example, in FIG. 10, the first receiving unit 9000 and the second receiving unit 9002 are both included.

The first receiving unit 9000 is configured to receive reference signal resource configuration information, which is notified by means of broadcast, of each target cell; and/or
the second receiving unit 9002 is configured to receive reference signal resource configuration information, which is notified by the serving cell by using user equipment-specific signaling, of each target cell.

Specifically, the specific signaling may include radio resource control (Radio Resource Control, RRC) higher layer signaling, or dynamic layer-1 signaling.

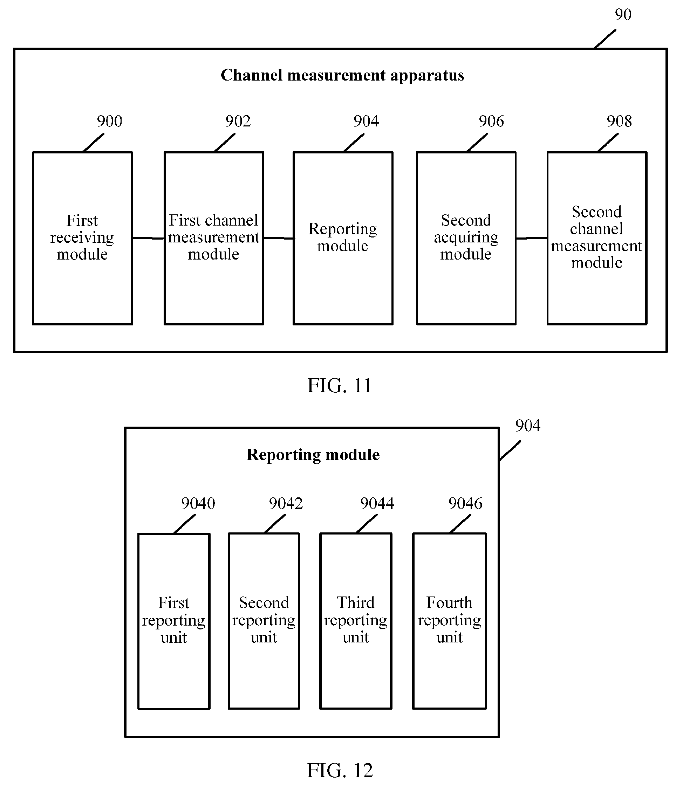

Still further, the target cell in this embodiment of the present invention includes the serving cell, that is, the channel measurement apparatus 90 may obtain multiple pieces of reference signal resource configuration information of the serving cell of the channel measurement apparatus 90 or the current cell, and the serving cell configures the reference signal resource configuration information by means of broadcast or by using the UE-specific signaling. Specifically, the first receiving module 900 in this embodiment may receive multiple pieces of reference signal resource configuration information of the current cell or another target cell, or the channel measurement apparatus 90 includes an extra receiving module, for example, reference may be made to a schematic structural diagram, shown in FIG. 11, of a second embodiment of a channel measurement apparatus according to the present invention. In addition to the first receiving module 900, the first channel measurement module 902, and the reporting module 904, the channel measurement apparatus 90 may further include a second acquiring module 906 and a second channel measurement module 908.

The second acquiring module 906 is configured to acquire, from the serving cell, at least one piece of reference signal resource configuration information of the current cell by means of broadcast or by using user equipment-specific signaling.

The second channel measurement module 908 is configured to perform channel measurement on the current cell according to the reference signal resource configuration information acquired by the second acquiring module 906.

Specifically, the second acquiring module 906 may obtain multiple pieces of reference signal resource configuration information of self-serving cell or the current cell, and the serving cell configures the reference signal resource configuration information by means of broadcast or by using the UE-specific signaling.

Description is provided below by using a CSI-RS as an example again. A CSI-RS resource 1 and a CSI-RS resource 2 may be configured by the serving cell in a cell-specific manner (that is, configuration information is notified to the UE in the cell by means of broadcast), or in a UE-specific manner (that is, configuration information is sent to different UEs by using UE-specific signaling, which may be RRC (radio resource control) higher layer signaling or dynamic layer-1 signaling). For the UE-specific manner for CSI-RS resource configuration, an eNB may configure a CSI-RS resource for the UE according to a location of the UE, for example, a location of UE 1 is under coverage of a beam having a downtilt A, then the eNB configures the CSI-RS resource 1 for UE 1, and the UE 1 performs measurement and feedback according to the configured CSI-RS resource 1.

Specifically, the channel measurement apparatus 90 may report a channel measurement result of the current serving cell and a channel measurement result of at least one target cell to the serving cell, so that the serving cell determines whether cell handover needs to be performed for the UE, a target cell to which the UE is to be handed over, and a service area, in the target cell, of a beam having an optimal downtilt.

It should be noted that, the reference signal resource configuration information in this embodiment of the present invention may include a cell ID, precoding matrix information, time-frequency resource location information, a quantity of ports, a pilot sequence, and the like. The precoding matrix information includes information about a weighting factor used for a current piece of reference signal resource configuration information, that is, information, which corresponds to the current piece of reference signal resource configuration information, about a beam having a downtilt.

It may be understood that, the first receiving module 900 and the second acquiring module 906 may be a same hardware physical module, or may be two separate hardware physical modules; the first channel measurement module 902 and the second channel measurement module 908 may also be a same hardware physical module, or may be two separate hardware physical modules.

Still further, with reference to a schematic structural diagram, shown in FIG. 12, of the reporting module of this embodiment the present invention, the structure of the channel measurement apparatus 90 in this embodiment of the present invention is described in further detail. The reporting module 904 includes: one or more units of a first reporting unit 9040, a second reporting unit 9042, a third reporting unit 9044, and a fourth reporting unit 9046. Description is provided by using an example in which the four units are included in FIG. 12.

The first reporting unit 9040 is configured to report, to the serving cell, channel quality measurement information corresponding to each piece of reference signal resource configuration information configured for the target cell.

The second reporting unit 9042 is configured to report, to the serving cell, channel quality measurement information corresponding to a channel quality measurement information average value of the target cell, where the channel quality measurement information average value is an average value of channel quality measurement information corresponding to all reference signal resource configuration information configured for the target cell.

The third reporting unit 9044 is configured to report, to the serving cell, channel quality measurement information corresponding to a channel quality measurement information maximum value of the target cell, where the channel quality measurement information maximum value is a maximum value of channel quality measurement information corresponding to all reference signal resource configuration information configured for the target cell.

The fourth reporting unit 9046 is configured to report, in a form of a bitmap to the serving cell, channel quality measurement information corresponding to at least one piece of reference signal resource configuration information configured for the target cell.

It may be understood that, functions of functional modules in the channel measurement apparatus 90 may be specifically implemented according to the methods in the foregoing method embodiments, and details are not described herein again.

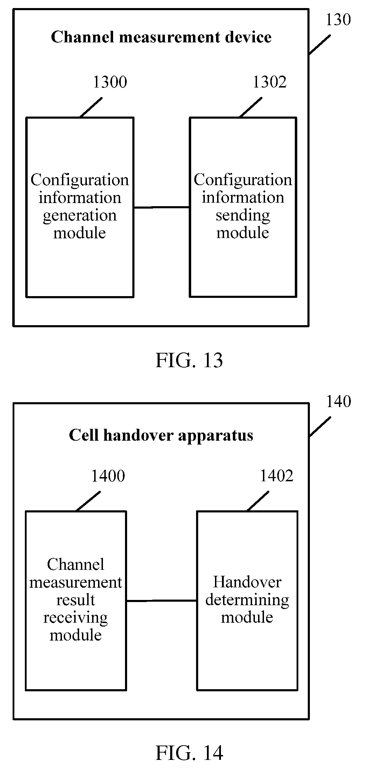

To help better implement the foregoing solutions of the embodiments of the present invention, the present invention correspondingly further provides a cell handover apparatus. FIG. 13 is a schematic structural diagram of a channel measurement device according to an embodiment of the present invention, and the channel measurement device 130 includes: a configuration information generation module 1300 and a configuration information sending module 1302.

The configuration information generation module 1300 is configured to perform, according to beams having different downtilts, weighting on signals of all antennas by using different weighting factors, to separately obtain different reference signal resource configuration information, where each piece of the reference signal resource configuration information corresponds to a beam having a different downtilt.

The configuration information sending module 1302 is configured to send at least two pieces of the reference signal resource configuration information to user equipment, so that the user equipment performs channel measurement.

It may be understood that, functions of functional modules in the channel measurement device 130 may be specifically implemented according to the methods in the foregoing method embodiments, and details are not described herein again.

To help better implement the foregoing solutions of the embodiments of the present invention, the present invention correspondingly further provides a cell handover apparatus. FIG. 14 is a schematic structural diagram of a cell handover apparatus according to an embodiment the present invention. The cell handover apparatus 140 includes: a channel measurement result receiving module 1400 and a handover determining module 1402.

The channel measurement result receiving module 1400 is configured to receive a channel measurement result of a target cell reported by user equipment, where the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1.

Specifically, the cell handover apparatus 140 may further include a sending module, and the sending module sends, by means of broadcast or by using user equipment-specific signaling, at least one piece of reference signal resource configuration information of a current serving cell to the user equipment. The specific signaling may include RRC higher layer signaling, or dynamic layer-1 signaling. For how the UE measures and reports the channel measurement result, refer to the foregoing embodiments, and details are not described herein again.

The handover determining module 1402 is configured to determine, according to the channel measurement result received by the channel measurement result receiving module, whether cell handover needs to be performed for the user equipment.

Specifically, the handover determining module 1402 compares the channel measurement result of the target cell reported by the UE with the channel measurement result of the current serving cell reported by the UE, to determine whether handover needs to be performed. For example, if it is found that channel quality of the target cell is higher than channel quality of the serving cell, the serving cell determines that handover may be performed; or if a difference between channel quality of the target cell and channel quality of the serving cell satisfies a particular threshold, it may be determined that handover is to be performed.

More specifically, when the handover determining module 1402 determines that cell handover needs to be performed for the UE, the UE may send, to the target cell, reference signal information, which corresponds to highest channel quality in the target cell, of the UE, and finally completes handover from the current serving cell to the target cell; for example, identifier information in the reference signal resource configuration information may be sent to the target cell, and the serving cell may perform sending by using an X2 interface between base stations.

Further, that the channel measurement result receiving module 1400 receives a channel measurement result of a target cell reported by user equipment includes any one of the following:
receiving channel quality measurement information reported by the user equipment and corresponding to each piece of reference signal resource configuration information configured for the target cell; or
receiving channel quality measurement information reported by the user equipment and corresponding to a channel quality measurement information average value of the target cell, where the channel quality measurement information average value is an average value of channel quality measurement information corresponding to all reference signal resource configuration information configured for the target cell; or
receiving channel quality measurement information reported by the user equipment and corresponding to a channel quality measurement information maximum value of the target cell, where the channel quality measurement information maximum value is a maximum value of channel quality measurement information corresponding to all reference signal resource configuration information configured for the target cell; or
receiving channel quality measurement information reported by the user equipment in a form of a bitmap and corresponding to at least one piece of reference signal resource configuration information configured for the target cell.

Specifically, when the channel measurement result of the target cell reported by the user equipment and received by the channel measurement result receiving module 1400 corresponds to at least two pieces of the reference signal resource configuration information, the handover determining module 1402 is specifically configured to: when it is determined, according to the at least two pieces of the reference signal resource configuration information corresponding to the channel measurement result, that channel quality of the target cell is higher than channel quality of the current serving cell, select a target cell having highest channel quality to perform cell handover for the user equipment.

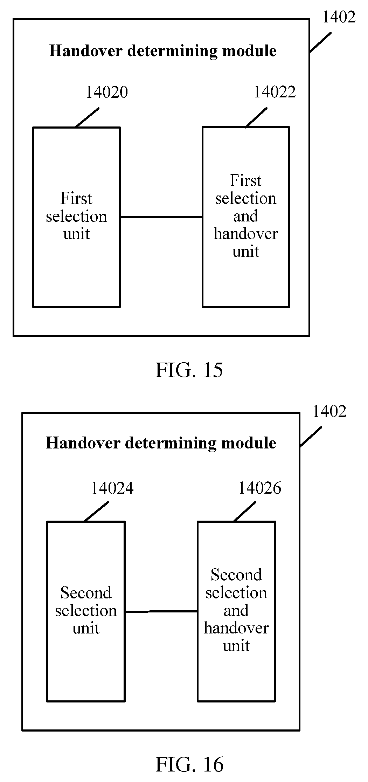

Still further, FIG. 15 is a schematic structural diagram of a first embodiment of a handover determining module according to the present invention. When the channel measurement result receiving module 1400 receives channel quality measurement information reported by the user equipment and corresponding to channel quality measurement information average values of at least two target cells, the handover determining module 1402 includes: a first selection unit 14020 and a first selection and handover unit 14022.

The first selection unit 14020 is configured to select a target cell that has a largest channel quality measurement information average value among the at least two target cells.

The first selection and handover unit 14022 is configured to: when it is determined, according to channel quality measurement information corresponding to the selected target cell, that channel quality of the target cell is higher than channel quality of the current serving cell, select the target cell, and perform cell handover for the user equipment.

Still further, FIG. 16 is a schematic structural diagram of a second embodiment of a handover determining module according to the present invention. When the channel measurement result receiving module 1400 receives channel quality measurement information reported by the user equipment and corresponding to channel quality measurement information maximum values of at least two target cells, the handover determining module 1402 includes: a second selection unit 14024 and a second selection and handover unit 14026.

The second selection unit 14024 is configured to select a target cell that has a largest channel quality measurement information maximum value among the at least two target cells.

The second selection and handover unit 14026 is configured to: when it is determined, according to channel quality measurement information corresponding to the selected target cell, that channel quality of the target cell is higher than channel quality of the current serving cell, select the target cell, and perform cell handover for the user equipment.

It may be understood that, functions of functional modules in the cell handover apparatus 140 may be specifically implemented according to the methods in the foregoing method embodiments, and details are not described herein again.

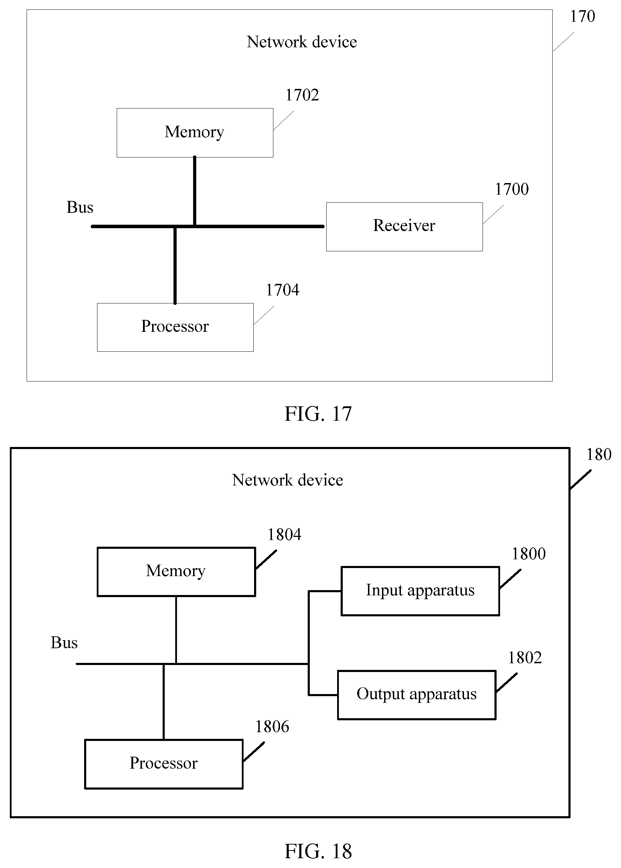

Correspondingly, an embodiment of the present invention further provides a network device. FIG. 17 is a schematic structural diagram of a first embodiment of a network device according to the present invention. A network device 170 includes a receiver 1700, a memory 1702, and a processor 1704. In some embodiments of the present invention, the receiver 1700, the memory 1702, and the processor 1704 may be connected by using a bus or in another manner, and FIG. 17 uses an example in which connection is implemented by using a bus.

The receiver 1700 receives reference signal resource configuration information of a target cell, where a quantity of pieces of the reference signal resource configuration information of the target cell is greater than 1.

Specifically, the receiver 1700 in this embodiment of the present invention may be a receiving and sending device such as an antenna. Each piece of reference signal resource configuration information of a cell corresponds to a beam, having a particular downtilt, of the cell, that is, information about beams, having different downtilts, in the cell may be represented by the sent reference signal resource configuration information. More specifically, each piece of reference signal resource configuration information of the cell may be generated by using a different weighting factor for a signal of each receiver of the cell, for example, for two-dimensional receiver configuration, beams having different downtilts may be obtained by performing weighting on signals of all receivers, and the beams having different downtilts may be generated by using different weighting factors. Therefore, multiple pieces of reference signal resource configuration information may be configured for the cell, and each piece of the reference signal resource configuration information of the target cell may correspond to one precoding matrix of the target cell. Specifically, when different reference signals are sent, a different weighting factor may be used for each different receiver.

In further detail, description is provided below by using a channel state information reference signal (Channel State Information Reference Signal, CSI-RS) as an example, but this embodiment of the present invention is not limited to the CSI-RS; a pilot resource of another type such as a demodulation reference signal (Demodulation Reference Signal, DM RS) or a sounding reference signal (Sounding Reference Signal, SRS) may also be used. For example, a base station eNB configures a CSI-RS resource 1 (that is, one piece of reference signal resource configuration information) and a CSI-RS resource 2 (that is, another piece of the reference signal resource configuration information) in the cell, where each CSI-RS resource may include a quantity of CSI-RS ports, and each CSI-RS port corresponds to a time-frequency location of a reference signal and sequence information of a CSI-RS. A different weighting factor is used for a signal of each receiver of the cell, a downtilt corresponding to each CSI-RS beam in the CSI-RS resource 1 is configured to be A, and a downtilt corresponding to each CSI-RS beam in the CSI-RS resource 2 is configured to be B.

After the foregoing configuration is completed, the receiver 1700 may receive reference signal resource configuration information of each target cell, and a quantity of pieces of reference signal resource configuration information of at least one target cell is greater than 1, that is, multiple pieces of reference signal resource configuration information may be configured for some target cells, and only one piece of reference signal resource configuration information may be configured for some cells.

The processor 1704 performs channel measurement on the target cell according to the reference signal resource configuration information, and controls the receiver 1700 to report a channel measurement result of the target cell to a serving cell.

Specifically, a measurement result of each reference signal may be a channel quality indicator (channel quality indicator, CQI), reference signal received power (Reference Signal Receiving Power, RSRP), reference signal received quality (Reference Signal Received Quality, RSRQ), a received signal strength indicator (Received Signal Strength Indication, RSSI), or the like. After a current serving cell of the network device receives the channel measurement result of each target cell reported by the network device, the current serving cell may determine whether cell handover needs to be performed for the network device, and a target cell to which the network device is to be handed over, and a service area, in the target cell, of a beam having an optimal downtilt.

Still further, the receiver 1700 may further receive the reference signal resource configuration information, which is notified by the serving cell by means of broadcast, of each target cell; or receive the reference signal resource configuration information, which is notified by the serving cell by using user equipment-specific signaling, of each target cell.

Specifically, the specific signaling may include RRC higher layer signaling, or dynamic layer-1 signaling.

Still further, the target cell in this embodiment of the present invention includes the serving cell of the network device, that is, the receiver 1700 may further receive multiple pieces of reference signal resource configuration information of self-serving cell or the current cell, and the serving cell configures the reference signal resource configuration information by means of broadcast or by using the UE-specific signaling.

Description is provided below by using a CSI-RS as an example again. A CSI-RS resource 1 and a CSI-RS resource 2 may be configured by the serving cell in a cell-specific manner (that is, configuration information is notified to the network device in the cell by means of broadcast), or in a UE-specific manner (that is, configuration information is sent to different network devices by using UE-specific signaling, which may be RRC (radio resource control) higher layer signaling or dynamic layer-1 signaling). For the UE-specific manner for CSI-RS resource configuration, an eNB may configure a CSI-RS resource for the UE according to a location of the UE, for example, a location of UE 1 is under coverage of a beam having a downtilt A, then the eNB configures the CSI-RS resource 1 for UE 1, and the UE 1 performs measurement and feedback according to the configured CSI-RS resource 1.

The processor 1704 may report a channel measurement result of the current serving cell and a channel measurement result of at least one target cell to the serving cell, so that the serving cell determines whether cell handover needs to be performed for the UE, a target cell to which the UE is to be handed over, and a service area, in the target cell, of a beam having an optimal downtilt.

It should be noted that, the reference signal resource configuration information in this embodiment of the present invention may include a cell ID, precoding matrix information, time-frequency resource location information, a quantity of ports, a pilot sequence, and the like. The precoding matrix information includes information about a weighting factor used for a current piece of reference signal resource configuration information, that is, information, which corresponds to the current piece of reference signal resource configuration information, about a beam having a downtilt.

Still further, the processor 1704 further executes any one of the following steps:
controlling the receiver 1700 to report, to the serving cell, channel quality measurement information corresponding to each piece of reference signal resource configuration information configured for the target cell; or
controlling the receiver 1700 to receive channel quality measurement information reported by the user equipment and corresponding to a channel quality measurement information average value of the target cell, where the channel quality measurement information average value is an average value of channel quality measurement information corresponding to all reference signal resource configuration information configured for the target cell; or
controlling the receiver 1700 to receive channel quality measurement information reported by the user equipment and corresponding to a channel quality measurement information maximum value of the target cell, where the channel quality measurement information maximum value is a maximum value of channel quality measurement information corresponding to all reference signal resource configuration information configured for the target cell; or
controlling the receiver 1700 to receive channel quality measurement information reported by the user equipment in a form of a bitmap and corresponding to at least one piece of reference signal resource configuration information configured for the target cell.

It may be understood that, the network device 170 in the foregoing solution of this embodiment may be a mobile communications device (such as a mobile phone or another portable communications device) or another network device; the receiver 1700 in this embodiment may be a signal receiving apparatus such as an antenna. Functions of functional modules in the network device 170 may be specifically implemented according to the methods in the foregoing method embodiments, and details are not described herein again.

Correspondingly, an embodiment of the present invention further provides a network device, which is described in detail below with reference to a schematic structural diagram, shown in FIG. 18, of a second embodiment of a network device according to the present invention. A network device 180 includes: an input apparatus 1800, an output apparatus 1802, a memory 1804, and a processor 1806 (there may be one or more processors 1806 in the network device, and FIG. 18 uses an example in which there is one processor). In some embodiments of the present invention, the input apparatus 1800, the output apparatus 1802, the memory 1804, and the processor 1806 may be connected by using a bus or in another manner, and FIG. 18 uses an example in which connection is implemented by using a bus.

The processor 1806 executes the following steps:
performing, according to beams having different downtilts, weighting on signals of all antennas by using different weighting factors, to separately obtain different reference signal resource configuration information, where each piece of the reference signal resource configuration information corresponds to a beam having a different downtilt; and sending at least two pieces of the reference signal resource configuration information to user equipment by using the output apparatus, so that the user equipment performs channel measurement.

Specifically, each piece of the reference signal resource configuration information corresponds to one precoding matrix.

It may be understood that, the network device 180 in the foregoing solution of this embodiment may be a base station device or another network device; functions of functional modules in the network device 180 may be specifically implemented according to the methods in the foregoing method embodiments, and details are not described herein again.

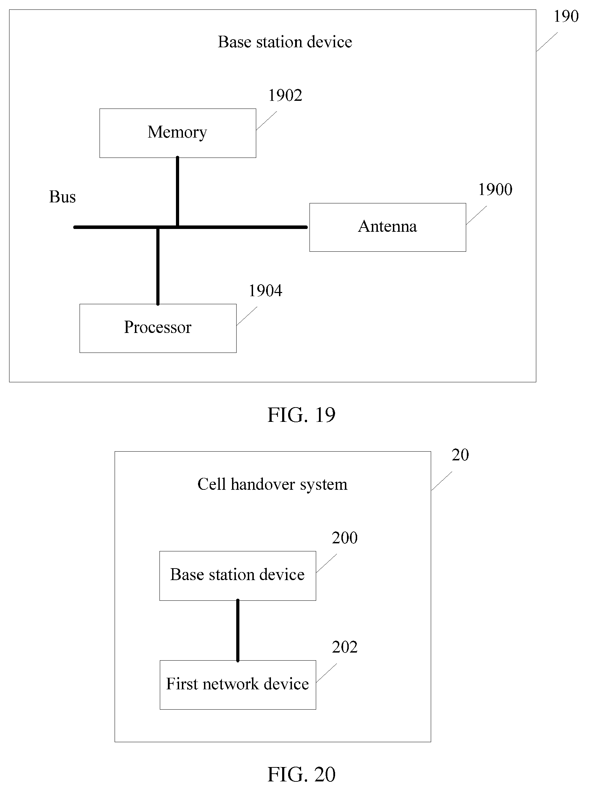

Correspondingly, an embodiment of the present invention further provides a base station device. As shown in FIG. 19, a base station device 190 includes a receiver 1900, a memory 1902, and a processor 1904. In some embodiments of the present invention, the receiver 1900, the memory 1902, and the processor 1904 may be connected by using a bus or in another manner, and FIG. 19 uses an example in which connection is implemented by using a bus.

The receiver 1900 receives a channel measurement result of a target cell reported by user equipment, where the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1; and the processor 1904 executes the following step:
determining, according to the channel measurement result, whether cell handover needs to be performed for the user equipment.

Specifically, the processor 1904 further executes the following step:
sending, by using the receiver 1900, by means of broadcast or by using user equipment-specific signaling, at least one piece of reference signal resource configuration information of a current serving cell to the user equipment.

Specifically, that the receiver 1900 receives a channel measurement result of a target cell reported by user equipment includes any one of the following:
receiving channel quality measurement information reported by the user equipment and corresponding to each piece of reference signal resource configuration information configured for the target cell; or
receiving channel quality measurement information reported by the user equipment and corresponding to a channel quality measurement information average value of the target cell, where the channel quality measurement information average value is an average value of channel quality measurement information corresponding to all reference signal resource configuration information configured for the target cell; or
receiving channel quality measurement information reported by the user equipment and corresponding to a channel quality measurement information maximum value of the target cell, where the channel quality measurement information maximum value is a maximum value of channel quality measurement information corresponding to all reference signal resource configuration information configured for the target cell; or
receiving channel quality measurement information reported by the user equipment in a form of a bitmap and corresponding to at least one piece of reference signal resource configuration information configured for the target cell.

Further, when the channel measurement result of the target cell reported by the user equipment and received by the receiver 1900 corresponds to at least two pieces of the reference signal resource configuration information, the determining, by the processor 1904, according to the channel measurement result, whether cell handover needs to be performed for the user equipment includes:
when it is determined, according to the at least two pieces of the reference signal resource configuration information corresponding to the channel measurement result, that channel quality of the target cell is higher than channel quality of the current serving cell, selecting a target cell having highest channel quality to perform cell handover for the user equipment.

Still further, when the receiver 1900 receives channel quality measurement information reported by the user equipment and corresponding to channel quality measurement information average values of at least two target cells, the determining, by the processor 1904, according to the channel measurement result, whether cell handover needs to be performed for the user equipment includes:
selecting a target cell that has a largest channel quality measurement information average value among the at least two target cells; and when it is determined, according to channel quality measurement information corresponding to the selected target cell, that channel quality of the target cell is higher than channel quality of the current serving cell, selecting the target cell, and performing cell handover for the user equipment.

Still further, when the receiver 1900 receives channel quality measurement information reported by the user equipment and corresponding to channel quality measurement information maximum values of at least two target cells, the determining, by the processor 1904, according to the channel measurement result, whether cell handover needs to be performed for the user equipment includes:
selecting a target cell that has a largest channel quality measurement information maximum value among the at least two target cells; and when it is determined, according to channel quality measurement information corresponding to the selected target cell, that channel quality of the target cell is higher than channel quality of the current serving cell, selecting the target cell, and performing cell handover for the user equipment.

It may be understood that, the receiver 1900 in this embodiment may be a signal receiving apparatus such as an antenna. Functions of functional modules in the base station device 190 may be specifically implemented according to the methods in the foregoing method embodiments, and details are not described herein again.

Correspondingly, an embodiment of the present invention further provides a cell handover system. As shown in FIG. 20, the cell handover system 20 includes a base station device 200 and a first network device 202.

For the first network device 202, reference may be made to the network device 170 in the embodiment of FIG. 17, and details are not described herein again.

For the base station device 200, reference may be made to the base station device 190 in the embodiment of FIG. 19, and details are not described herein again.

Further, the cell handover system 20 in this embodiment of the present invention may further include a second network device; for the second network device, reference may be made to the network device 180 in the embodiment of FIG. 18, and details are not described herein again.

To sum up, by means of implementation of the embodiments of the present invention, reference signal resource configuration information of a target cell is acquired, and channel measurement is performed on the target cell according to each piece of reference signal resource configuration information, where each piece of the reference signal resource configuration information corresponds to a beam having a different downtilt, which resolves a problem in the prior art that channel quality of beams, having different downtilts, of a target cell cannot be obtained; and a channel measurement result, of a beam having a downtilt, of the target cell is reported to a serving cell to perform cell handover, which greatly optimizes cell handover, improves resource utilization or spectral efficiency, improves a system capacity, and better implements dynamic changes in coverage of cells.

A person of ordinary skill in the art may understand that all or some of the processes of the methods in the embodiments may be implemented by a computer program instructing relevant hardware. The program may be stored in a computer-readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention. A person of ordinary skill in the art may understand that all or some of processes that implement the foregoing embodiments and equivalent modifications made in accordance with the claims of the present invention shall fall within the scope of the present invention.

## Claims

1. A channel measurement method, comprising:
receiving reference signal resource configuration information of a target cell, wherein a quantity of pieces of the reference signal resource configuration information of the target cell is greater than 1;
performing channel measurement on the target cell according to the reference signal resource configuration information; and
reporting a channel measurement result of the target cell to a serving cell.

2. The channel measurement method according to claim 1, wherein the receiving reference signal resource configuration information of each target cell comprises:
receiving the reference signal resource configuration information, which is notified by means of broadcast, of each target cell; or
receiving the reference signal resource configuration information, which is notified by the serving cell by using user equipment-specific signaling, of each target cell.

3. The channel measurement method according to claim 2, wherein the user equipment-specific signaling comprises radio resource control higher layer signaling, or dynamic layer-1 signaling.

4. The channel measurement method according to any one of claims 1 to 3, wherein each piece of the reference signal resource configuration information of the target cell corresponds to one precoding matrix.

5. The channel measurement method according to any one of claims 1 to 4, wherein the target cell comprises the serving cell.

6. The channel measurement method according to any one of claims 1 to 5, wherein the reporting a channel measurement result of the target cell to a serving cell comprises any one of the following:
reporting, to the serving cell, channel quality measurement information corresponding to each piece of reference signal resource configuration information configured for the target cell; or
reporting, to the serving cell, channel quality measurement information corresponding to a channel quality measurement information average value of the target cell, wherein the channel quality measurement information average value is an average value of channel quality measurement information corresponding to all reference signal resource configuration information configured for the target cell; or
reporting, to the serving cell, channel quality measurement information corresponding to a channel quality measurement information maximum value of the target cell, wherein the channel quality measurement information maximum value is a maximum value of channel quality measurement information corresponding to all reference signal resource configuration information configured for the target cell; or
reporting, in a form of a bitmap to the serving cell, channel quality measurement information corresponding to at least one piece of reference signal resource configuration information configured for the target cell.

7. A channel measurement method, comprising:
performing, according to beams having different downtilts, weighting on signals of all antennas by using different weighting factors, to separately obtain different reference signal resource configuration information, wherein each piece of the reference signal resource configuration information corresponds to a beam having a different downtilt; and
sending at least two pieces of the reference signal resource configuration information to user equipment, so that the user equipment performs channel measurement.

8. The method according to claim 7, wherein each piece of the reference signal resource configuration information corresponds to one precoding matrix.

9. A cell handover method, comprising:
receiving a channel measurement result of a target cell reported by user equipment, wherein the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1; and determining, according to the channel measurement result, whether cell handover needs to be performed for the user equipment.

10. The method according to claim 9, wherein the target cell comprises a serving cell of the user equipment.

11. The method according to claim 9 or 10, wherein the receiving a channel measurement result of a target cell reported by user equipment comprises any one of the following:
receiving channel quality measurement information reported by the user equipment and corresponding to each piece of reference signal resource configuration information configured for the target cell; or
receiving channel quality measurement information reported by the user equipment and corresponding to a channel quality measurement information average value of the target cell, wherein the channel quality measurement information average value is an average value of channel quality measurement information corresponding to all reference signal resource configuration information configured for the target cell; or
receiving channel quality measurement information reported by the user equipment and corresponding to a channel quality measurement information maximum value of the target cell, wherein the channel quality measurement information maximum value is a maximum value of channel quality measurement information corresponding to all reference signal resource configuration information configured for the target cell; or
receiving channel quality measurement information reported by the user equipment in a form of a bitmap and corresponding to at least one piece of reference signal resource configuration information configured for the target cell.

12. The method according to any one of claims 9 to 11, wherein each piece of the reference signal resource configuration information corresponds to one precoding matrix.

13. The method according to any one of claims 9 to 12, wherein when the received channel measurement result of the target cell reported by the user equipment corresponds to at least two pieces of the reference signal resource configuration information, the determining, according to the channel measurement result, whether cell handover needs to be performed for the user equipment comprises:
when it is determined, according to the at least two pieces of the reference signal resource configuration information corresponding to the channel measurement result, that channel quality of the target cell is higher than channel quality of a current serving cell, selecting a target cell having highest channel quality to perform cell handover for the user equipment.

14. The method according to claim 11, wherein when channel quality measurement information reported by the user equipment and corresponding to channel quality measurement information average values of at least two target cells is received, the determining, according to the channel measurement result, whether cell handover needs to be performed for the user equipment comprises:
selecting a target cell that has a largest channel quality measurement information average value among the at least two target cells; and
when it is determined, according to channel quality measurement information corresponding to the selected target cell, that channel quality of the target cell is higher than channel quality of a current serving cell, selecting the target cell, and performing cell handover for the user equipment.

15. The method according to claim 11, wherein when channel quality measurement information reported by the user equipment and corresponding to channel quality measurement information maximum values of at least two target cells is received, the determining, according to the channel measurement result, whether cell handover needs to be performed for the user equipment comprises:
selecting a target cell that has a largest channel quality measurement information maximum value among the at least two target cells; and
when it is determined, according to channel quality measurement information corresponding to the selected target cell, that channel quality of the target cell is higher than channel quality of a current serving cell, selecting the target cell, and performing cell handover for the user equipment.

16. A channel measurement apparatus, comprising:
a first receiving module, configured to receive reference signal resource configuration information of a target cell, wherein a quantity of pieces of the reference signal resource configuration information of the target cell is greater than 1;
a first channel measurement module, configured to perform channel measurement on the target cell according to the reference signal resource configuration information received by the first receiving module; and
a reporting module, configured to report a channel measurement result of the target cell to a serving cell.

17. The apparatus according to claim 16, wherein the first receiving module comprises:
a first receiving unit, configured to receive reference signal resource configuration information, which is notified by means of broadcast, of each target cell; and/or
a second receiving unit, configured to receive reference signal resource configuration information, which is notified by the serving cell by using user equipment-specific signaling, of each target cell.

18. The apparatus according to claim 17, wherein the specific signaling comprises radio resource control higher layer signaling, or dynamic layer-1 signaling.

19. The apparatus according to any one of claims 16 to 18, wherein each piece of the reference signal resource configuration information of the target cell corresponds to one precoding matrix.

20. The apparatus according to any one of claims 16 to 19, wherein the target cell comprises the serving cell.

21. The apparatus according to any one of claims 16 to 20, wherein the reporting module comprises any one or more of the following units:
a first reporting unit, configured to report, to the serving cell, channel quality measurement information corresponding to each piece of reference signal resource configuration information configured for the target cell;
a second reporting unit, configured to report, to the serving cell, channel quality measurement information corresponding to a channel quality measurement information average value of the target cell, wherein the channel quality measurement information average value is an average value of channel quality measurement information corresponding to all reference signal resource configuration information configured for the target cell;
a third reporting unit, configured to report, to the serving cell, channel quality measurement information corresponding to a channel quality measurement information maximum value of the target cell, wherein the channel quality measurement information maximum value is a maximum value of channel quality measurement information corresponding to all reference signal resource configuration information configured for the target cell; and
a fourth reporting unit, configured to report, in a form of a bitmap to the serving cell, channel quality measurement information corresponding to at least one piece of reference signal resource configuration information configured for the target cell.

22. A channel measurement device, comprising:
a configuration information generation module, configured to perform, according to beams having different downtilts, weighting on signals of all antennas by using different weighting factors, to separately obtain different reference signal resource configuration information, wherein each piece of the reference signal resource configuration information corresponds to a beam having a different downtilt; and
a configuration information sending module, configured to send at least two pieces of the reference signal resource configuration information to user equipment, so that the user equipment performs channel measurement.

23. The device according to claim 22, wherein each piece of the reference signal resource configuration information corresponds to one precoding matrix.

24. A cell handover apparatus, comprising:
a channel measurement result receiving module, configured to receive a channel measurement result of a target cell reported by user equipment, wherein the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1; and
a handover determining module, configured to determine, according to the channel measurement result received by the channel measurement result receiving module, whether cell handover needs to be performed for the user equipment.

25. The apparatus according to claim 24, wherein the apparatus further comprises:
a sending module, configured to send, by means of broadcast or by using user equipment-specific signaling, at least one piece of reference signal resource configuration information of each target cell comprising a current serving cell to the user equipment.

26. The apparatus according to claim 24 or 25, wherein that the channel measurement result receiving module receives a channel measurement result of a target cell reported by user equipment comprises any one of the following:
receiving channel quality measurement information reported by the user equipment and corresponding to each piece of reference signal resource configuration information configured for the target cell; or
receiving channel quality measurement information reported by the user equipment and corresponding to a channel quality measurement information average value of the target cell, wherein the channel quality measurement information average value is an average value of channel quality measurement information corresponding to all reference signal resource configuration information configured for the target cell; or
receiving channel quality measurement information reported by the user equipment and corresponding to a channel quality measurement information maximum value of the target cell, wherein the channel quality measurement information maximum value is a maximum value of channel quality measurement information corresponding to all reference signal resource configuration information configured for the target cell; or
receiving channel quality measurement information reported by the user equipment in a form of a bitmap and corresponding to at least one piece of reference signal resource configuration information configured for the target cell.

27. The apparatus according to any one of claims 24 to 26, wherein when the channel measurement result of the target cell reported by the user equipment and received by the channel measurement result receiving module corresponds to at least two pieces of the reference signal resource configuration information, the handover determining module is specifically configured to:
when it is determined, according to the at least two pieces of the reference signal resource configuration information corresponding to the channel measurement result, that channel quality of the target cell is higher than channel quality of the current serving cell, select a target cell having highest channel quality to perform cell handover for the user equipment.

28. The apparatus according to claim 26, wherein when the channel measurement result receiving module receives channel quality measurement information reported by the user equipment and corresponding to channel quality measurement information average values of at least two target cells, the handover determining module comprises:
a first selection unit, configured to select a target cell that has a largest channel quality measurement information average value among the at least two target cells; and
a first selection and handover unit, configured to: when it is determined, according to channel quality measurement information corresponding to the selected target cell, that channel quality of the target cell is higher than channel quality of the current serving cell, select the target cell, and perform cell handover for the user equipment.

29. The apparatus according to claim 26, wherein when the channel measurement result receiving module receives channel quality measurement information reported by the user equipment and corresponding to channel quality measurement information maximum values of at least two target cells, the handover determining module comprises:
a second selection unit, configured to select a target cell that has a largest channel quality measurement information maximum value among the at least two target cells; and
a second selection and handover unit, configured to: when it is determined, according to channel quality measurement information corresponding to the selected target cell, that channel quality of the target cell is higher than channel quality of the current serving cell, select the target cell, and perform cell handover for the user equipment.

30. A network device, comprising a receiver and a processor, wherein
the receiver receives reference signal resource configuration information of a target cell, wherein a quantity of pieces of the reference signal resource configuration information of the target cell is greater than 1; and
the processor performs channel measurement on the target cell according to the reference signal resource configuration information, and reports a channel measurement result of the target cell to a serving cell.

31. The network device according to claim 30, wherein that the receiver receives reference signal resource configuration information of each target cell comprises:
the receiver receives the reference signal resource configuration information, which is notified by means of broadcast, of each target cell; or
the receiver receives the reference signal resource configuration information, which is notified by the serving cell by using user equipment-specific signaling, of each target cell.

32. The network device according to claim 31, wherein the user equipment-specific signaling comprises radio resource control higher layer signaling, or dynamic layer-1 signaling.

33. The network device according to any one of claims 30 to 32, wherein each piece of the reference signal resource configuration information of the target cell corresponds to one precoding matrix.

34. The network device according to any one of claims 30 to 33, wherein the target cell comprises the serving cell.

35. The network device according to any one of claims 30 to 34, wherein that the processor reports a channel measurement result of the target cell to the serving cell comprises any one of the following steps:
reporting, to the serving cell, channel quality measurement information corresponding to each piece of reference signal resource configuration information configured for the target cell; or
reporting, to the serving cell, channel quality measurement information corresponding to a channel quality measurement information average value of the target cell, wherein the channel quality measurement information average value is an average value of channel quality measurement information corresponding to all reference signal resource configuration information configured for the target cell; or
reporting, to the serving cell, channel quality measurement information corresponding to a channel quality measurement information maximum value of the target cell, wherein the channel quality measurement information maximum value is a maximum value of channel quality measurement information corresponding to all reference signal resource configuration information configured for the target cell; or
reporting, in a form of a bitmap to the serving cell, channel quality measurement information corresponding to at least one piece of reference signal resource configuration information configured for the target cell.

36. A network device, comprising: an input apparatus, an output apparatus, a memory, and a processor, wherein
the processor executes the following steps:
performing, according to beams having different downtilts, weighting on signals of all antennas by using different weighting factors, to separately obtain different reference signal resource configuration information, wherein each piece of the reference signal resource configuration information corresponds to a beam having a different downtilt; and sending at least two pieces of the reference signal resource configuration information to user equipment by using the output apparatus, so that the user equipment performs channel measurement.

37. The network device according to claim 36, wherein each piece of the reference signal resource configuration information corresponds to one precoding matrix.

38. A base station device, comprising a receiver and a processor, wherein
the receiver receives a channel measurement result of a target cell reported by user equipment, wherein the channel measurement result is a channel measurement result that is obtained by the user equipment by performing channel measurement on the target cell according to received reference signal resource configuration information of the target cell, and a quantity of pieces of the reference signal resource configuration information of the target cell received by the user equipment is greater than 1; and
the processor executes the following step:
determining, according to the channel measurement result, whether cell handover needs to be performed for the user equipment.

39. The base station device according to claim 38, wherein the processor further executes the following step:
sending, by means of broadcast or by using user equipment-specific signaling, at least one piece of reference signal resource configuration information of each target cell comprising a current serving cell to the user equipment.

40. The base station device according to claim 38 or 39, wherein that the receiver receives a channel measurement result of a target cell reported by user equipment comprises any one of the following:
receiving channel quality measurement information reported by the user equipment and corresponding to each piece of reference signal resource configuration information configured for the target cell; or
receiving channel quality measurement information reported by the user equipment and corresponding to a channel quality measurement information average value of the target cell, wherein the channel quality measurement information average value is an average value of channel quality measurement information corresponding to all reference signal resource configuration information configured for the target cell; or
receiving channel quality measurement information reported by the user equipment and corresponding to a channel quality measurement information maximum value of the target cell, wherein the channel quality measurement information maximum value is a maximum value of channel quality measurement information corresponding to all reference signal resource configuration information configured for the target cell; or
receiving channel quality measurement information reported by the user equipment in a form of a bitmap and corresponding to at least one piece of reference signal resource configuration information configured for the target cell.

41. The base station device according to any one of claims 38 to 40, wherein when the channel measurement result of the target cell reported by the user equipment and received by the receiver corresponds to at least two pieces of the reference signal resource configuration information, the determining, by the processor, according to the channel measurement result, whether cell handover needs to be performed for the user equipment comprises:
when it is determined, according to the at least two pieces of the reference signal resource configuration information corresponding to the channel measurement result, that channel quality of the target cell is higher than channel quality of the current serving cell, selecting a target cell having highest channel quality to perform cell handover for the user equipment.

42. The base station device according to claim 40, wherein when the receiver receives channel quality measurement information reported by the user equipment and corresponding to channel quality measurement information average values of at least two target cells, the determining, by the processor, according to the channel measurement result, whether cell handover needs to be performed for the user equipment comprises:
selecting a target cell that has a largest channel quality measurement information average value among the at least two target cells; and when it is determined, according to channel quality measurement information corresponding to the selected target cell, that channel quality of the target cell is higher than channel quality of the current serving cell, selecting the target cell, and performing cell handover for the user equipment.

43. The base station device according to claim 40, wherein when the receiver receives channel quality measurement information reported by the user equipment and corresponding to channel quality measurement information maximum values of at least two target cells, the determining, by the processor, according to the channel measurement result, whether cell handover needs to be performed for the user equipment comprises:
selecting a target cell that has a largest channel quality measurement information maximum value among the at least two target cells; and when it is determined, according to channel quality measurement information corresponding to the selected target cell, that channel quality of the target cell is higher than channel quality of the current serving cell, selecting the target cell, and performing cell handover for the user equipment.

44. A cell handover system, comprising a base station device and a first network device, wherein
the first network device is the network device according to any one of claims 30 to 35; and
the base station device is the base station device according to any one of claims 38 to 44.

45. The system according to claim 44, further comprising a second network device, wherein
the second network device is the network device according to claim 36 or 37.
